# EUROPÄISCHE PATENTSCHRIFT

(11) **EP 2 754 626 B1**
(45) Veröffentlichungstag und Bekanntmachung des Hinweises auf die Patenterteilung: **27.02.2019**
(21) Anmeldenummer: 13005780.5
(22) Anmeldetag: 12.12.2013
(51) Int. Cl.: B65G 15/62, B65G 15/08

(54) **Fördervorrichtung mit konkavem Gurt**
Conveyor device with concave belt
Dispositif convoyeur à courroie concave

(30) Priorität: 11.01.2013 DE 102013000372
(43) Veröffentlichungstag der Anmeldung: 16.07.2014
(73) Patentinhaber: BEUMER Group GmbH & Co. KG, 59269 Beckum (DE)
(72) Erfinder: Heitplatz, Heino, 48317 Drensteinfurt (DE); Jesper, Jan Josef, 34431 Marsberg (DE)
(74) Vertreter: Philipp, Matthias

(56) Entgegenhaltungen:
- EP-A1- 1 167 248
- GB-A- 1 400 555
- GB-A- 1 499 105
- US-A- 2 264 332
- US-A- 4 696 390
- US-A- 4 917 232
- US-A1- 2010 147 656

## Beschreibung

Die Erfindung betrifft eine Fördervorrichtung mit einem zwischen zwei einander parallel und mit Abstand gegenüberstehenden Antriebs- und Umlenkrollen in einem Obertrum und einem Untertrum endlos umlaufend geführten, in allen Richtungen flexiblen Lastaufnahmemittel zur Aufnahme von Fördergut, insbesondere Stückgut, das mittels an Längsrändern des Lastaufnahmemittels angeordneten Antriebssträngen in einer Förderrichtung antreibbar ist.
Eine derartige Fördervorrichtung ist beispielsweise aus der EP 1 897 824 B1 bekannt, wobei dort das Lastaufnahmemittel aus einem in seiner Umlaufrichtung flexiblen und quer dazu biegesteifen Kettenband nach Art eines Plattenförderers besteht. Da das durch das Kettenband gebildete Lastaufnahmemittel allerdings nur in einer Richtung flexibel, in der dazu senkrechten Richtung dagegen biegesteif ist, kann sich im Betrieb auch nur eine eindimensionale Krümmung ausbilden, so dass in Situationen, in denen auf einen auf dem Lastaufnahmemittel liegenden Gegenstand Beschleunigungskräfte in einer Richtung wirken, in der das Lastaufnahmemittel nicht gekrümmt ist, die Gefahr besteht, dass der Gegenstand von dem Lastaufnahmemittel abrutscht.

Weiterhin ist aus EP 1 167 248 A1 (siehe Figur13) ein Fahrwagen mit einer Fördervorrichtung mit einem zwischen zwei einander parallel und mit Abstand gegenüberstehenden Antriebs- und Umlenkrollen in einem Obertrum und einem Untertrum endlos umlaufend geführten, elastischen und in allen Richtungen flexiblen Lastaufnahmemittel zum Aufnehmen von Fördergut bekannt, wobei die Antriebs- und Umlenkrollen diaboloförmig sind, so dass das Lastaufnahmemittel an den Antriebs- und Umlenkrollen an den Seiten einen größeren Umlenkradius als in einem dazwischen befindlichen Bereich aufweist. Die Erfindung hat sich zur Aufgabe gestellt, eine gattungsgemäße Fördervorrichtung dahingehend weiterzuentwickeln, dass bei möglichst einfachem Aufbau eine zweidimensionale Krümmung und eine von unten wirkende Abstützung des flexiblen Lastaufnahmemittels erzielt werden kann, wobei die Krümmung einer muldenförmigen Verformung des Lastaufnahmemittels entspricht, so dass nicht mehr die Gefahr besteht, dass ein Gegenstand unbeabsichtigt seitlich von dem Lastaufnahmemittel abrutscht oder abrollt.
Diese Aufgabe wird erfindungsgemäß durch eine Fördervorrichtung nach Anspruch 1 gelöst.

Es besteht die Möglichkeit, dass das Lastaufnahmemittel im unbelasteten Zustand, ohne aufgenommenes Fördergut, das Abstützmittel nicht berührt, oder aber dass das Lastaufnahmemittel im unbelasteten Zustand bereichsweise auf dem Abstützmittel aufliegt, wobei neben der Vorspannung des Lastaufnahmemittels auch das Eigengewicht des Lastaufnahmemittels und die konstruktiv vorgegebene Position des Abstützmittels relativ zu den Antriebs- und Umlenkrollen und dessen Abstand von dem unbelasteten, d. h. nur von seinem Eigengewicht belasteten, Lastaufnahmemittel (Obertrum) eine Rolle spielt.

Die Antriebsstränge können allein durch Längsrandbereiche des bspw. gurtförmigen Lastaufnahmemittels gebildet sein, von denen jeder bspw. eine Breite von höchstens 2%, 5%, 10%, 20% oder 25% einer Breite des Lastaufnahmemittels aufweisen kann, oder aber durch Längsrandbereiche in Kombination mit zusätzlich an Längsrändern des Lastaufnahmemittels fixierten Elementen wie Keil- oder Zahnriemen. Derartige Elemente besitzen vorzugsweise eine größere Elastizität als das Lastaufnahmemittel, so dass die Elastizität der Längsrandbereiche des Lausaufnahmemittels nur geringfügig reduziert wird. Die Antriebsstränge können eine Elastizität aufweisen, die gleich oder geringer ist als die Elastizität des Lastaufnahmemittels. Die Antriebsstränge können in einem nur durch sein Eigengewicht belasteten Zustand des Lastaufnahmemittels mit einer vorbestimmten oder einstellbaren Vorspannkraft zwischen den Antriebs- und Umlenkrollen geführt sein.

Wie ausgeführt besteht die Möglichkeit, dass die Antriebsstränge weniger leicht dehnbar sind als das Lastaufnahmemittel, so dass sie auch in einem belasteten Zustand, bei Auflage eines Gegenstands auf dem Lastaufnahmemittel, nicht stark durchhängen, während das Lastaufnahmemittel je nach Gewicht des Gegenstands einen deutlichen Durchhang zeigen und teilweise, weitgehend oder vollständig auf dem Abstützmittel aufliegen kann. Zweckmäßigerweise ist ein größter Durchhang des Lastaufnahmemittels (Abstand von einem ideal belastungsfreien ebenen Verlauf zwischen den Umlenk- und Antriebsrollen) an einem tiefsten Punkt des Lastaufnahmemittels zwischen den Antriebssträngen größer als ein größter Durchhang der Antriebsstränge selbst, sowohl im unbelasteten als auch im belasteten Zustand.

Die Antriebsstränge und das Lastaufnahmemittel können vorzugsweise unterschiedlich stark gedehnt sein. Die Antriebsstränge sind bevorzugt stärker gedehnt als ein dazwischen befindlicher Bereich des Lastaufnahmemittels, um eine ausreichende Vorspannkraft zur Übertragung der erforderlichen Antriebskraft zu erzielen. Das Lastaufnahmemittel wird in diesem Fall ohne oder mit einer geringeren Dehnung als die Antriebsstränge betrieben. Durch die geringere Dehnung des Lastaufnahmemittels als die der Antriebsstränge, bei gleicher oder größerer Elastizität im Vergleich zur Elastizität der Antriebsstränge, wird eine Muldung des Lastaufnahmemittels in einem mittleren Bereich zwischen den Antriebssträngen bereits durch dessen Eigengewicht ermöglicht. Bereits in diesem unbelasteten Zustand kann sich das Lastaufnahmemittel auf dem Abstützmittel abstützen. Infolge der zusätzlichen Belastung durch Fördergüter wird der Durchhang des Lastaufnahmemittels weiter verstärkt, und das Lastaufnahmemittel stützt sich bei Belastung mit zumindest einem Mindestgewicht eines Stückguts auf dem Abstützmittel ab.

Vertikal benachbart zu den Längsrändern des Lastaufnahmemittels können Abstützelemente zum Abstützen der Antriebsstränge angeordnet sein, die im unbelasteten Zustand des Lastaufnahmemittels einen vertikalen Abstand zu den Antriebssträngen aufweisen können. Diese Abstützelemente können in geringem Abstand unter einer Position der Antriebsstränge im unbelasteten Zustand angeordnet sein, um einen Durchhang der Antriebsstränge auf kleine Werte zu begrenzen, etwa auf 1 %, 2%,3 %,4 % oder 5% des Abstands der Drehachsen der Antriebs- und Umlenkrollen voneinander.

Unterhalb des Untertrums kann ein unteres Abstützmittel angeordnet sein, um einen Durchhang des Untertrums zu begrenzen oder ganz zu eliminieren, wodurch die Ausbildung eines Durchhangs bzw. einer konkaven oder gemuldeten Form des Obertrums erleichtert wird.

Bevorzugt ist vorgesehen, dass die Antriebsstränge durch Keil- oder Zahnriemen, die innenseitig an den Längsrändern des Lastaufnahmemittels fixiert sind gebildet sind.

Die Erfindung bezieht sich ferner auf ein Fahrzeug mit einer Fördervorrichtung nach der Erfindung, wobei eine Förderrichtung der Fördervorrichtung quer zu einer Fahrtrichtung des Fahrzeugs ist. Das Fahrzeug kann beispielsweise als Fahrwagen eines Stückgutförderers ausgebildet sein, das mechanisch oder mittels einer geeigneten Steuerung mit weiteren gleichartigen Fahrzeugen in Verbindung steht, etwa als zugartige Anordnung in einem Stückgut- oder Sortierförderer. Das Fahrzeug bzw. ein derartiger Fahrwagen kann gelenkt oder schienengeführt ausgebildet sein. Auch kann ein derartiges Fahrzeug im Rahmen eines fahrerlosen Transportsystems eingesetzt werden, insbesondere mit einer automatischen Steuerung.

Die Erfindung wird nachfolgend anhand von Ausführungsbeispielen erläutert, wobei auf eine Zeichnung Bezug genommen wird, in der
Fig. 1 eine Ausführungsform, die nicht Teil der Erfindung ist, zeigt, wobei Fig. 1a eine Draufsicht, Fig. 1b eine Seitenansicht, Fig. 1c eine Schnittansicht K-K in Fig. 1a, Fig. 1d eine Schnittansicht A-A in Fig. 1b, Fig. le Einzelheiten aus Fig. 1b, Fig. 1f Einzeleinheiten aus Fig. 1d und Fig. 1g, h zwei perspektivische Ansichten zeigen,
Fig. 1i einen vergrößerten Ausschnitt aus Fig. 1a zeigt, in dem ein Rand- und Umlenkbereich des Lastaufnahmemittels im Schnitt dargestellt ist;
Fig.2 eine Ausführungsform, die nicht Teil der Erfindung ist, zeigt, wobei Fig. 2a - h entsprechende Ansichten wie in Fig. 1 zeigen,
Fig.3 eine Ausführungsform, die nicht Teil der Erfindung ist, zeigt, wobei Fig. 3a - h entsprechende Ansichten wie in Fig. 1 zeigen,
Fig. 4 eine Ausführungsform der Erfindung zeigt, wobei Fig. 4a - h entsprechende Ansichten wie in Fig. 1a - h zeigen,
Fig. 5 die Ausführungsform nach Fig. 1 in einem beladenen Zustand zeigt, wobei Fig. 5a - h den Ansichten nach Fig. 1a - h entsprechen,
Fig. 6a eine Ausführungsform, die nicht Teil der Erfindung ist, zeigt,
Fig. 6b - d eine Ausführungsform, die nicht Teil der Erfindung ist, zeigt, und
Fig. 7 eine Ausführungsform, die nicht Teil der Erfindung ist, zeigt, wobei Fig. 7a -h entsprechende Ansichten wie in Fig. 1a - h zeigen.

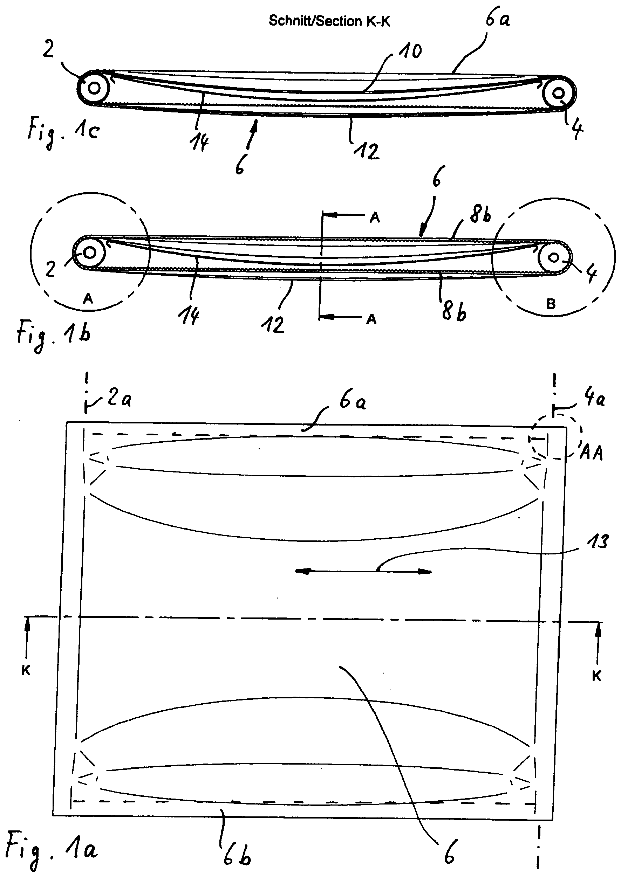

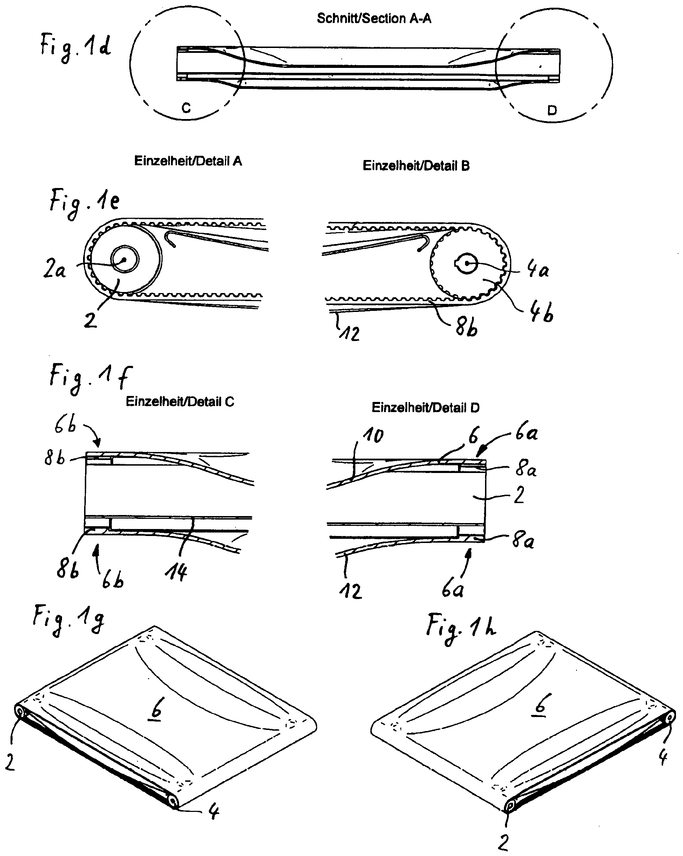

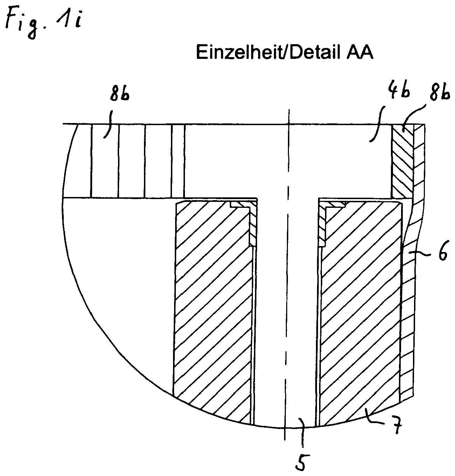

Fig. 1 zeigt in einer Draufsicht, verschiedenen Seiten- und Schnittansichten sowie in zwei perspektivischen Ansichten eine erste Ausführungsform einer Fördervorrichtung, die nicht Teil der Erfindung ist. Die Fördervorrichtung besteht im Wesentlichen aus zwei einander parallel und mit Abstand gegenüberstehenden Antriebs- und Umlenkrollen 2, 4, die um Drehachsen 2a, 4a drehbar sind und von denen zumindest eine (hier die Antriebsrolle 4) angetrieben ist, und um die ein Lastaufnahmemittel in Form eines flexiblen Fördergurts 6 endlos umlaufend geführt ist.
Der Fördergurt 6 ist innenseitig an seinen äußeren Längsrändern 6a, 6b jeweils mit einem Zahnriemen 8a, 8b versehen, der mit dem Fördergurt fest verbunden ist, beispielsweise durch Verkleben oder Aufvulkanisieren, und zusammen mit dem Längsrandbereich, mit dem er verbunden ist, einen Antriebsstrang 8a, b bildet. Die Aufgabe der Antriebsstränge besteht darin, Antriebskraft von der Antriebsrolle 4 auf den Fördergurt 6 zu übertragen.

In der dargestellten Ausführungsform sind auf der Antriebsrolle 4 endseitig Zahnscheiben 4b angeordnet, die mit den Zahnriemen 8a, b formschlüssig in Eingriff stehen (Fig. 1e). Die Umlenkrolle 2 ist außenseitig glatt. Der Durchmesser der Umlenkrolle 2 an ihren seitlichen Endbereichen im Bereich der Antriebsstränge bzw. der Zahnriemen kann von dem Durchmesser des mittleren Bereichs der Umlenkrolle 2 abweichen, insbesondere größer sein. Gleiches gilt für den Durchmesser der Zahnscheiben, der größer sein kann als der zwischen den Zahnscheiben liegende mittlere Bereich der Antriebsrolle 4.

Fig. 1i erläutert dies anhand einer vergrößerten Darstellung eines Endbereichs der Antriebsrolle 4 mit der Zahnscheibe 4b. Die Antriebsrolle 4 weist eine zentrale Welle 5 auf, an der endseitig die Zahnscheiben 4b drehfest gehalten sind. Zwischen den Zahnscheiben 4b ist eine Hülse 7 mit Außendurchmesser d drehbar auf der Welle 5 gelagert. Die Zahnscheiben 4b und die damit in Eingriff stehenden, umlaufenden Zahnriemen 8a, b sind so ausgelegt, dass ein äußerer Umlenkdurchmesser D der Zahnriemen 8a, b auf den Zahnscheiben 4b größer ist als d. Dadurch werden die Längsränder 6a, 6b des Fördergurts stärker gedehnt als der zwischen diesen liegende mittlere Bereich des Fördergurts 6, der auf der Hülse 7 umläuft. Dies wiederum hat zur Folge, dass sich bereits ohne Belastung eine gemuldete Form des Fördergurts einstellt.

Der mittlere Teil des Fördergurts, der sich zwischen den Zahnriemen 8a, b befindet, ist wie erläutert ohne oder mit einer geringeren Vorspannung als die Längsränder 8a, 6b um die Antriebs- und Umlenkrollen 2, 4 geführt, was gleichermaßen für ein Obertrum 10 und ein Untertrum 12 des Fördergurts 6 gilt, wie in Fig. 1c und 1f dargestellt ist. Insbesondere ist der fehlende bzw. vergleichsweise geringe Durchhang der Zahnriemen 8a, b und der mit diesen verbundenen Längsränder 6a, b und der vergleichsweise große, muldenförmige Durchhang des dazwischen liegenden Bereichs des Fördergurts 6, sowohl in Förderrichtung 13 zu den benachbarten Umlenk- und Antriebsrollen 2, 4 gesehen als auch senkrecht dazu in Richtung auf die Zahnriemen 8a, b gesehen, deutlich zu erkennen.

Um dem Fördergurt 6 bei Belastung eine definierte Unterstützung zu geben und einen übermäßigen Durchhang zu verhindern, ist unterhalb des Obertrums 10, zwischen Ober- und Untertrum 10, 12, ein Abstützmittel in Form eines Gleitblechs 14 angeordnet, das in Richtung auf das Obertrum 10 konkav ausgebildet ist. Das Gleitblech 14 ist in der dargestellten Ausführung eindimensional gekrümmt. Es ist quer zur Förderrichtung 13, oder in einer zu den Drehachsen 2a, 4a der Umlenk- und Antriebsrollen 2, 4 parallelen Richtung gesehen, eben und in Förderrichtung 13 gesehen gekrümmt. Fig. 1f zeigt den geradlinigen Verlauf des Gleitblechs 14 in einer Richtung quer zur Förderrichtung 13.

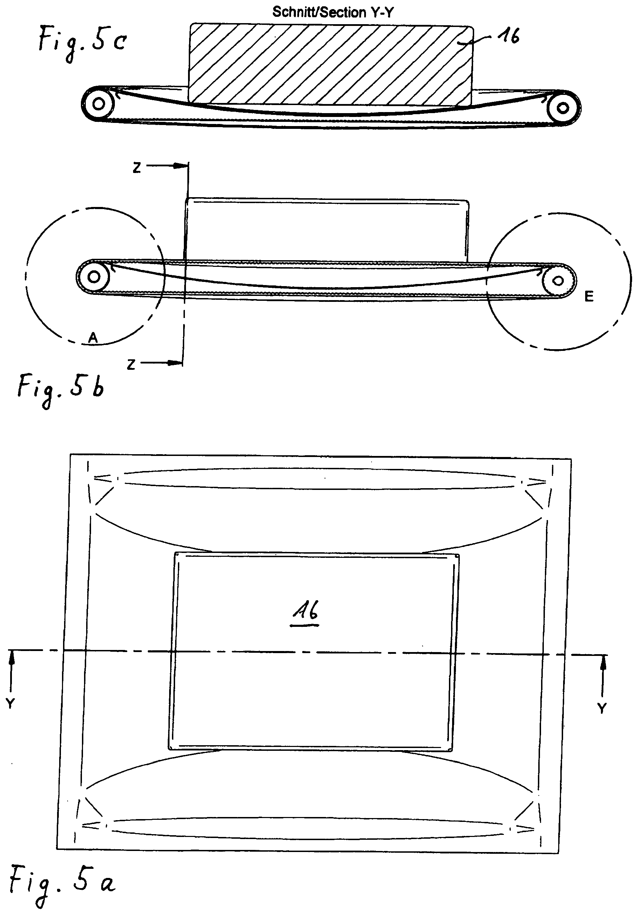

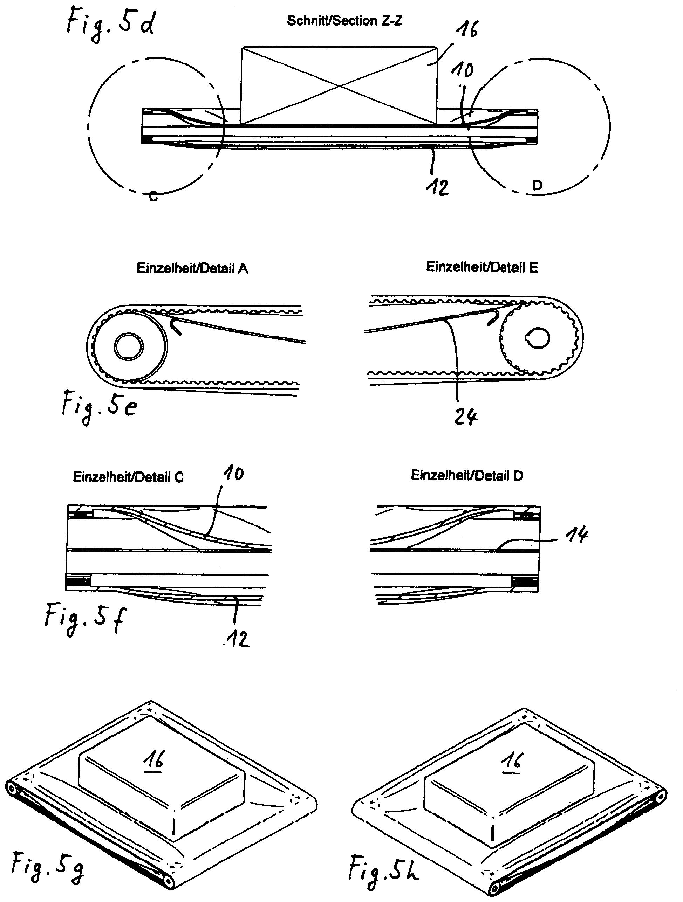

In Fig. 5 ist für die Ausführungsform nach Fig. 1 der Verlauf des Fördergurts 6 unter Belastung durch ein auf dem Fördergurt aufliegendes Stückgutteil 16 dargestellt. Wie Fig. 5b zeigt, weisen auch in diesem Belastungsfall die Längsränder 6a, b mit Zahnriemen 8a, b des Fördergurts 6 praktisch keinen Durchhang auf, während der Fördergurt 6 in einem mittleren Bereich, wo das Stückgutteil 16 aufliegt, bis zu dem Gleitblech 14 nach unten gedrückt ist, wie auch Fig. 5d zeigt, in der ein Schnitt im Bereich einer Stirnfläche des Stückgutteils 16 in einer Ebene senkrecht zur Förderrichtung 13 dargestellt ist.

Fig. 5f zeigt im Unterschied zu Fig. 1f, dass sich der Durchhang des Untertrums 12 aufgrund der Belastung des Obertrums 10 verringert hat, was auch Fig. 5b, c und d zu entnehmen ist.

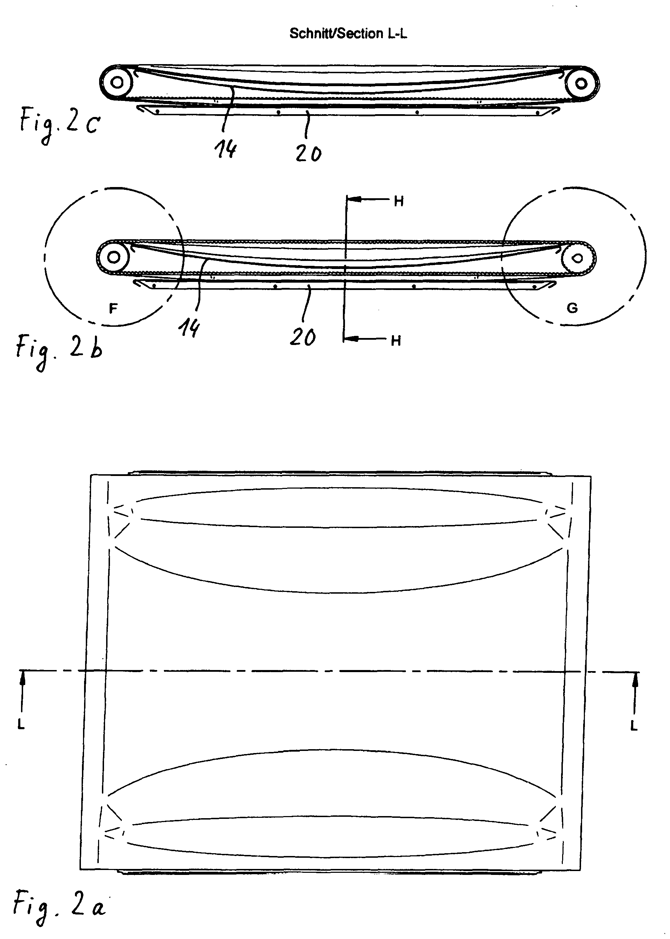

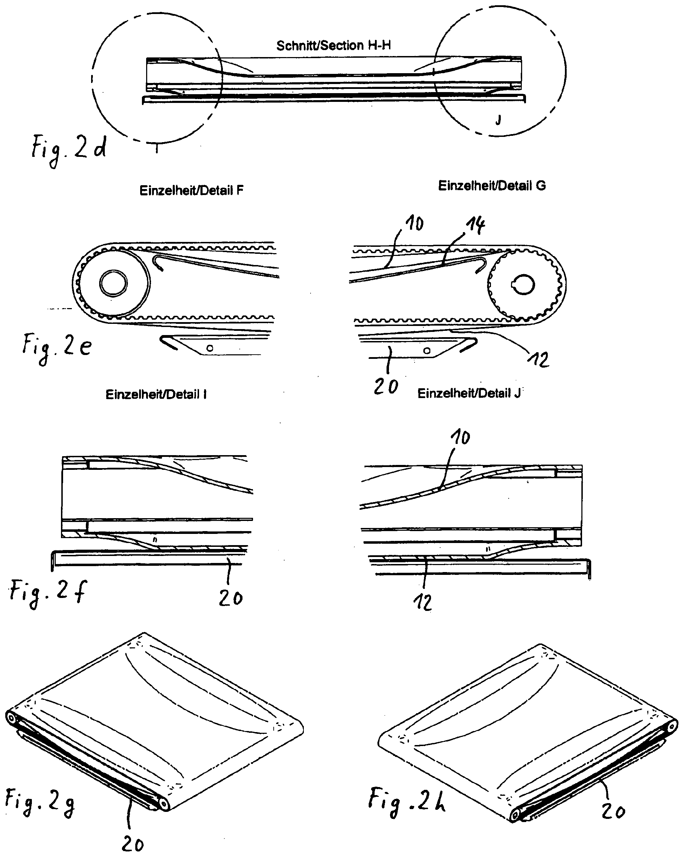

Da sich ein Durchhang des Obertrums 10 dadurch erleichtern oder vergrößern lässt, dass ein Durchhang des Untertrums 12 verringert oder eliminiert wird, kann es günstig sein, ein unteres Abstützmittel zur Abstützung des Untertrums vorzusehen, um auf diese Weise einen Durchhang des Untertrums zu begrenzen oder ganz zu eliminieren. Fig. 2 zeigt eine Ausführung ähnlich Fig. 1, bei der ein unteres Abstützmittel 20 in Form eines Gleitblechs vorgesehen ist. Im Unterschied zu dem Abstützmittel für das Obertrum in Form des Gleitblechs 14 ist das untere Abstützmittel 20 nicht konkav geformt, sondern eben. Die sich damit ergebende Form des bereichsweise auf dem unteren Abstützmittel 20 aufliegenden Untertrums 12 ist in Fig. 2b, c und d und vergrößert in Fig. 2f dargestellt.

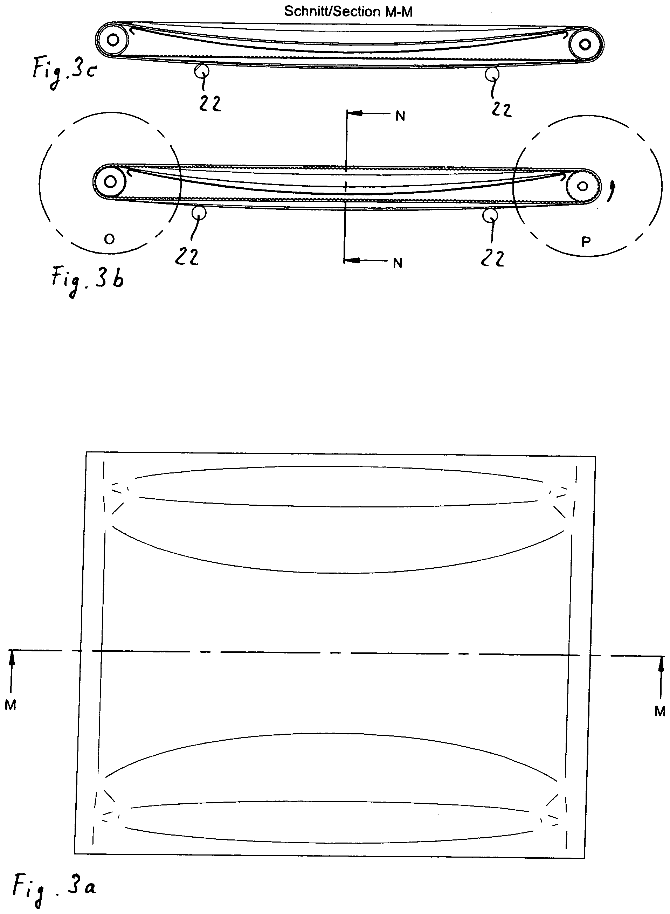

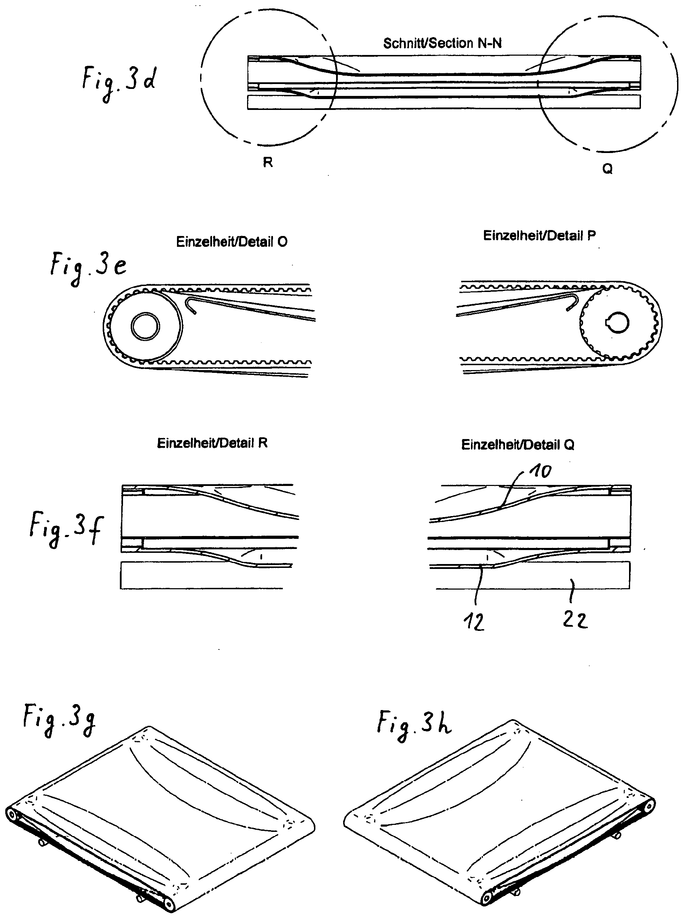

Fig. 3 zeigt eine Variante, bei der das untere Abstützmittel 20 nicht durch ein Gleitblech, sondern durch eine oder mehrere Abstützrollen 22 gebildet ist, deren Drehachsen parallel zu denen der Umlenk- und Antriebsrollen 2, 4 sind.

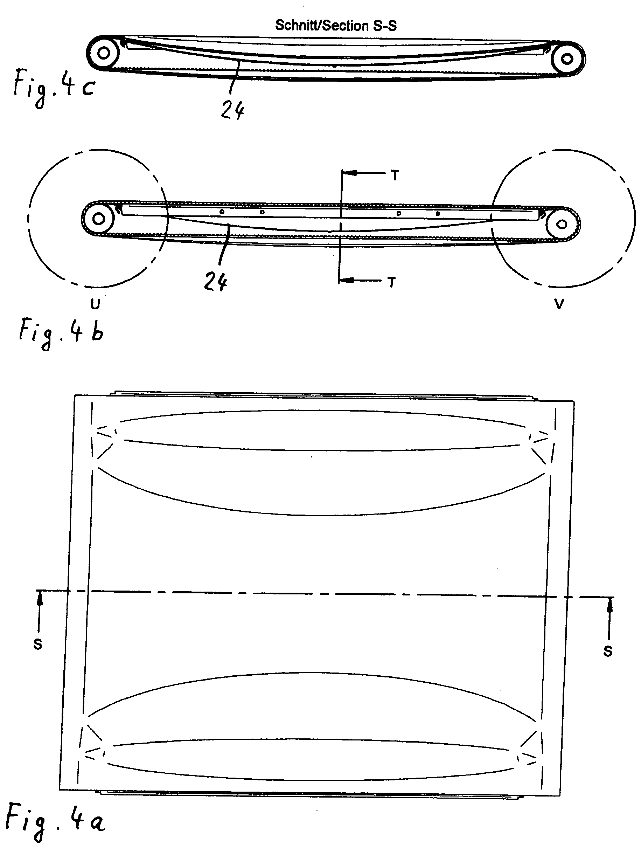

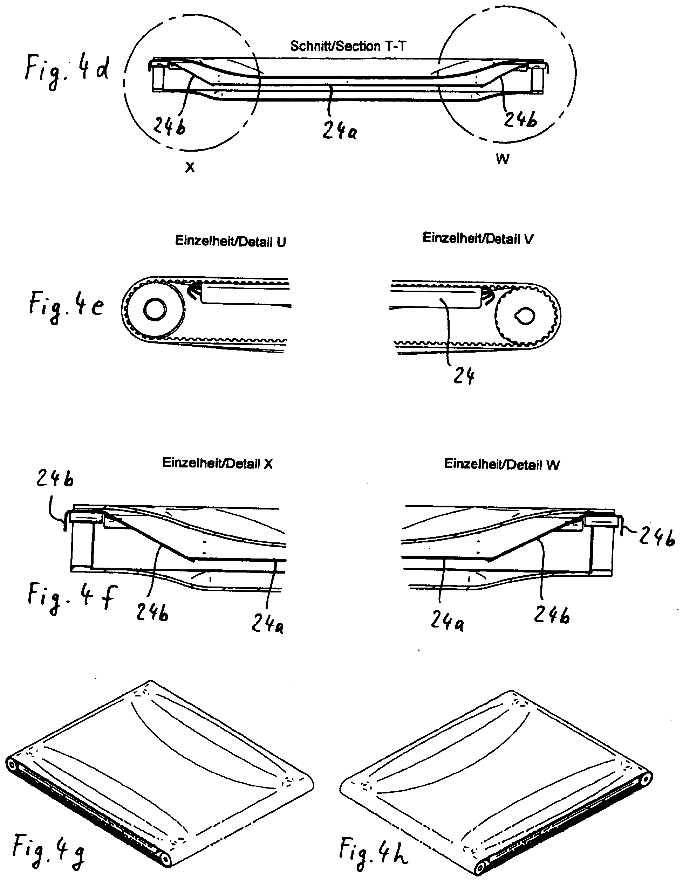

Fig. 4 zeigt eine Ausführungsform der Erfindung, bei der das Abstützmittel in Form eines eine zweidimensionale Konkavität bildenden, gemuldeten Gleitblechs 24 gebildet ist, das einen mittleren Bereich 24a mit einer Formgebung entsprechend dem Gleitblech 14 nach Fig. 1 aufweist, welches eindimensional gekrümmt ist, wobei sich an den mittleren Bereich 24a seitliche, zu den Längsrändern 6a, b des Fördergurts 6 muldenförmig ansteigende Bereiche 24b anschließen, die bis unmittelbar unterhalb der Zahnriemen 8a, b verlaufen können, wie es in Fig. 4d und 4f dargestellt ist. Auch bei dieser Ausführungsform kann ein unteres Abstützmittel gemäß Fig. 2 oder 3 vorgesehen sein.
Das Abstützmittel 14 kann alternativ durch konkav ausgebildete Rollen- bzw. Röllchenleisten oder konkav ausgebildete Rollenbahnen gebildet sein. Gleiches gilt für das gemuldete Gleitblech 24, bei dem der mittlere Bereich und/oder die seitlichen Bereiche durch Rollenleisten oder Rollenbahnen gebildet sein können.

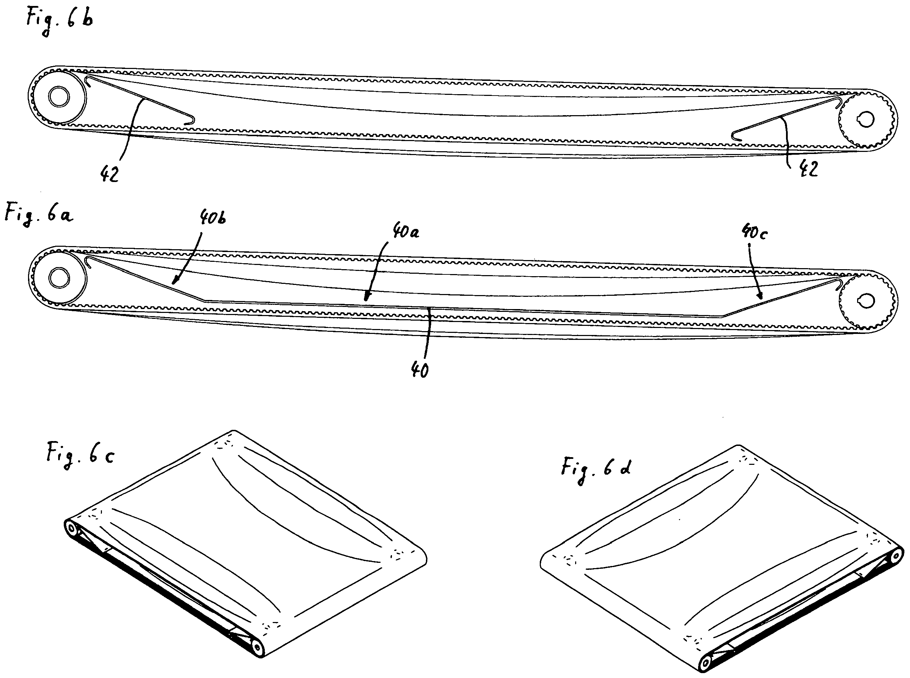

Fig. 6a zeigt eine Ausführungsform, bei der ein Abstützmittel in Form eines bereichsweise ebenen Zwischenblechs 40 eine Berührung zwischen Obertrum und Untertrum und gleichzeitig einen zu starken Durchhang des Obertrums verhindert. Das das Abstützmittel bildende Zwischenblech 40 besteht aus einem ebenen mittleren Bereich 40a und zwei davon abgekanteten, ebenfalls ebenen Bereichen 40b, 40c, die sich bis zu den Umlenk- und Antriebsrollen 2, 4 erstrecken. Die abgekanteten Bereiche 40b, c erstrecken sich von knapp unterhalb des Obertrums bis knapp oberhalb des Untertrums, wo sie in den mittleren Bereich 40a übergehen. Der mittlere Bereich 40a hat in Förderrichtung 13 gesehen eine größere Länge als die abgekanteten Bereiche 40b, c und kann etwa einen Anteil von 50%, 60%, 70% oder 80% des gegenseitigen Abstands der Achsen der Umlenk- und Antriebsrollen 2, 4 einnehmen.

Fig. 6b, c und d zeigen eine weitere Ausführungsform, bei der sich das Abstützmittel lediglich in der Nähe der Antriebs- und Umlenkrollen 2, 4 befindet und in dem dargestellten Beispiel den abgekanteten Bereichen 40b, c der Ausführungsform nach Fig. 6a entspricht, ohne den mittleren Bereich 40a. Das Abstützmittel besteht in dieser Ausführungsform somit aus zwei einander gegenüberstehenden Abstützteilen 42, die sich von den Antriebs- und Umlenkrollen 2,4 aus erstrecken und eine relativ kurze Länge, in Förderrichtung gesehen, besitzen, beispielsweise jeweils 10%, 20% oder 30% eines gegenseitigen Abstands der Drehachsen der Antriebs- und Umlenkrollen 2, 4. Die Abstützteile 42 erstrecken sich von der Antriebs- oder Umlenkrolle aus vom Obertrum zum Untertrum des Förderbands 6 in abfallender Richtung.

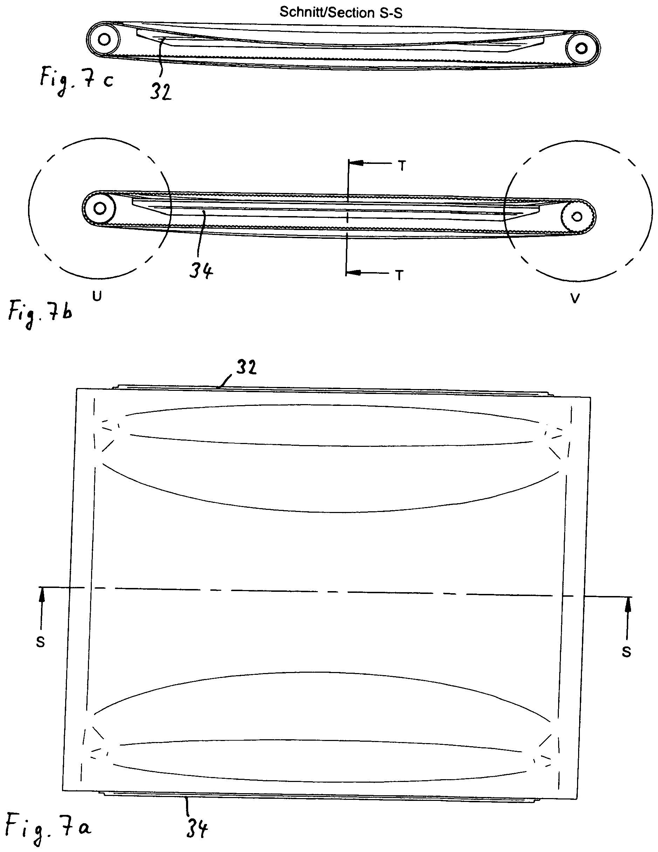

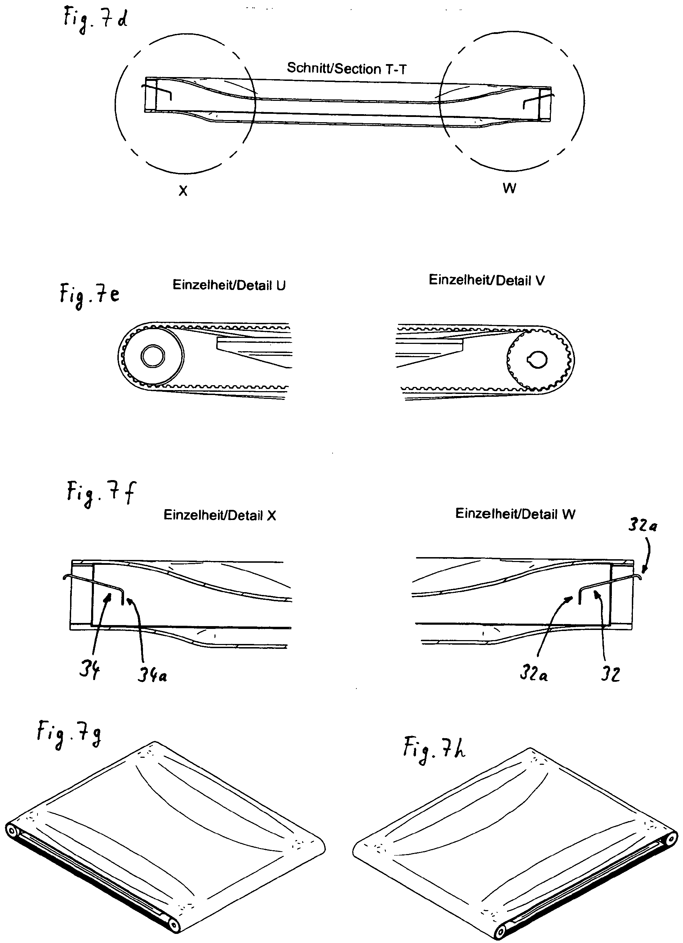

Fig. 7 zeigt eine Ausführungsform, bei der das Lastaufnahmemittel bzw. der Fördergurt lediglich im Bereich der Antriebsstränge entlastet werden soll, wenn ein schweres Stückgutteil auf den Fördergurt aufgelegt wird. Zu diesem Zweck ist das Abstützmittel quer zur Förderrichtung 13 nicht durchgehend ausgebildet, sondern weist zwei Abstützrandbereiche 32, 34 auf, die mit Abstand unterhalb der Antriebsstränge angeordnet sind und eine Neigung quer zur Förderrichtung, zur Mitte hin abfallend, aufweisen. Da bei einer Belastung des Fördergurts mit einem mittig aufgelegten Stückgutteil der Fördergurt in seinen Längsrandbereichen und damit die Antriebsstränge eine in Richtung zueinander abfallende Querneigung erhalten, liegen die Antriebsstränge tendenziell flächig auf den Abstützrandbereichen 32, 34 auf, die eine ähnliche Querneigung besitzen, wodurch eine günstige Abstützwirkung erzielt wird.

In der dargestellten Ausführungsform sind die Abstützrandbereiche 32, 34 eben und mit seitlichen Abkantungen 32a, 34a als Verstärkungen versehen. In anderen Ausgestaltungen könnten die Abstützrandbereiche in Förderrichtung gesehen eine Krümmung aufweisen, ähnlich wie es bei dem in Fig. 1 dargestellten Gleitblech der Fall ist, und/oder quer zur Förderrichtung gesehen eine Krümmung aufweisen.

### Bezugszeichenliste

- 2: Umlenkrolle
- 2a: Drehachse
- 4: Antriebsrolle
- 4a: Drehachse
- 4b: Zahnscheibe
- 5: Welle
- 6: Fördergurt (Lastaufnahmemittel)
- 6a, b: Längsrand
- 7: Hülse
- 8a, b: Zahnriemen (Antriebsstrang)
- 10: Obertrum
- 12: Untertrum
- 13: Förderrichtung
- 14: Gleitblech (Abstützmittel)
- 16: Stückgutteil
- 20: unteres Abstützmittel
- 22: Abstützrolle
- 24: gemuldetes Gleitblech
- 24a: mittlerer Bereich
- 24b: seitlicher Bereich
- 28, 30: Abstützbereich
- 32, 34: Abstützrandbereich
- 32a, 34a: Abkantung
- 40: Zwischenbleich
- 40a: mittlerer Bereich
- 40b, 40c: abgekanteter Bereich
- 42: Abstützteil

- d: Durchmesser (von 7)
- D: Durchmesser (von 8a, b auf 4b)
- L: axiale Länge (von 2, 4)

## Patentansprüche

1. Fördervorrichtung mit einem zwischen zwei einander parallel und mit Abstand gegenüberstehenden Antriebs- und Umlenkrollen (2, 4) in einem Obertrum (10) und einem Untertrum (12) endlos umlaufend geführten, elastischen und in allen Richtungen flexiblen Lastaufnahmemittel (6) zum Aufnehmen von Fördergut, das mittels an Längsrändern (6a, b) des Lastaufnahmemittels (6) angeordneten Antriebssträngen (8a, b) in einer Förderrichtung (13) antreibbar ist, wobei zwischen dem Obertrum (10) und dem Untertrum (12) ein Abstützmittel (14) für das Obertrum (10) angeordnet ist, wobei die Antriebsstränge (8a, b) stärker gedehnt sind als ein dazwischen befindlicher Bereich des Lastaufnahmemittels (6), wobei das Lastaufnahmemittel (6) an wenigstens einer der Antriebs- und Umlenkrollen (2, 4) im Bereich der Antriebsstränge (8a, b) einen größeren Umlenkradius als in einem dazwischen befindlichen Bereich aufweist, und wobei das Abstützmittel (14) zweidimensional gekrümmt ist mit einer Krümmung in der Förderrichtung und quer dazu und einen flächigen oder punktförmigen tiefsten Bereich zwischen den Antriebs- und Umlenkrollen (2, 4) und zwischen den Längsrändern (6a, b) des Lastaufnahmemittels (6) aufweist.

2. Fördervorrichtung nach Anspruch 1, **dadurch gekennzeichnet, dass** das Lastaufnahmemittel (6) im unbelasteten Zustand das Abstützmittel (14) nicht berührt.

3. Fördervorrichtung nach Anspruch 1, **dadurch gekennzeichnet, dass** das Lastaufnahmemittel (6) im unbelasteten Zustand bereichsweise auf dem Abstützmittel (14) aufliegt.

4. Fördervorrichtung nach einem der vorangehenden Ansprüche, **dadurch gekennzeichnet, dass** die Antriebsstränge (8a, b) im unbelasteten Zustand des Lastaufnahmemittels (6) mit einer vorbestimmten oder einstellbaren Vorspannkraft zwischen den Antriebs- und Umlenkrollen (2, 4) geführt sind.

5. Fördervorrichtung nach einem der vorangehenden Ansprüche, **dadurch gekennzeichnet, dass** unterhalb des Untertrums (12) des Lastaufnahmemittels (6) ein unteres Abstützmittel (20) angeordnet ist, um einen Durchhang des Untertrums (12) zu begrenzen oder zu eliminieren.

6. Fördervorrichtung nach einem der vorangehenden Ansprüche, **dadurch gekennzeichnet, dass** die Antriebsstränge (8a, b) Zahnriemen sind, die innenseitig an den Längsrändern (6a, b) des Lastaufnahmemittels (6) fixiert sind.

7. Fördervorrichtung nach einem der vorangehenden Ansprüche, **dadurch gekennzeichnet, dass** die Antriebs- und Umlenkrollen (2, 4) entlang ihrer axialen Länge (L) mehrere Zonen mit unterschiedlichen Durchmessern aufweisen, durch die Zonen mit unterschiedlicher Dehnung im Lastaufnahmemittel (6) gebildet sind.

8. Fahrzeug mit einer Fördervorrichtung nach einem der vorangehenden Ansprüche, wobei eine Förderrichtung (13) der Fördervorrichtung quer zu einer Fahrtrichtung des Fahrzeugs ist, insbesondere als Fahrwagen eines Stückgutförderers in mechanischer oder gesteuerter Verbindung mit weiteren gleichartigen Fahrzeugen, schienengeführt oder als fahrerloses Transportsystem.

## Claims

1. Conveyor device with an elastic load-bearing means (6) guided between two drive and return rollers (2, 4) which are spaced apart parallel to and opposite one another, wherein said load-bearing means circulates endlessly in an upper carrying run (10) and a lower carrying run (12), is flexible in all directions and is configured to receive articles to be conveyed and which can be driven in a conveying direction (13) by means of drive trains (8a, b) disposed on longitudinal edges (6a, b) of said load-bearing means (6), wherein a support means (14) for the upper carrying run (10) is located between the upper carrying run (10) and the lower carrying run (12), wherein the drive trains (8a, b) are stretched to a greater extent than a region of the load-bearing means (6) located between them, wherein the load-bearing means (6) has a greater deflection radius on at least one of the drive and return rollers (2, 4) in the region of the drive trains (8a, b) than in a region located between them, and wherein the support means (14) is curved two-dimensionally with a bend in the conveying direction and crosswise to this and has a deepest region over a certain area or at a point between the drive and return rollers (2, 4) and between the longitudinal edges (6a, b) of the load-bearing means (6).

2. Conveyor device according to claim 1, **characterized in that**, in the unloaded state, the load-bearing means (6) does not touch the support means (14).

3. Conveyor device according to claim 1, **characterized in that**, in the unloaded state, some regions of the load-bearing means (6) rest on the support means (14).

4. Conveyor device according to one of the preceding claims, **characterized in that** when the load-bearing means (6) is in an unloaded state, the drive trains (8a, b) are guided between the drive and return rollers (2, 4) with a pre-determined or adjustable biasing force.

5. Conveyor device according to one of the preceding claims, **characterized in that** a lower support means (20) is disposed beneath the lower carrying run (12) of the load-bearing means (6) in order to limit or eliminate the sag of the lower carrying run (12).

6. Conveyor device according to one of the preceding claims, **characterized in that** the drive trains (8 a, b) are toothed belts fixed on the inside to the longitudinal edges (6a, b) of the load-bearing means (6).

7. Conveyor device according to one of the preceding claims, **characterized in that** the drive and return rollers (2, 4) have a plurality of zones of different diameters along their axial length (L), through which zones with different degrees of stretching are formed in the load-bearing means (6).

8. Vehicle with a conveyor device according to one of the preceding claims, wherein a conveyor direction (13) of the conveyor device is transverse to a direction of travel of the vehicle, especially configured as a car of a load item conveyor which is connected mechanically or in a controlled manner to further vehicles of the same kind and is rail-mounted or configured as a driverless transport system.

## Revendications

1. Appareil de convoyage avec dispositif élastique de support de charge (6) guidé entre deux rouleaux de transmission et de retour (2, 4) qui sont équidistants et parallèles et se font face ; et ledit dispositif de support de charge a une circulation sans fin dans une voie supérieure de transport (10) et une voie inférieure de transport (12), est flexible dans tous les sens et a une configuration qui lui permet de recevoir les articles à transporter et d'être piloté dans un sens de convoyage (13) par le biais de trains de transmissions (8a, b) disposés sur les bordures longitudinales (6a, b) dudit dispositif de support de charge (6) ; et un moyen de support (14) pour la voie supérieure de transport (10) est implanté entre la voie supérieure de transport (10) et la voie inférieure de transport (12) ; et les trains de transmission (8a, b) ont un étirement plus important que dans une partie du dispositif de support de charge (6) intercalé entre eux ; et le dispositif de support de charge (6) a un rayon d'inflexion plus important au niveau du ou des rouleaux de transmission et de retour (2, 4) dans la zone des trains de transmission (8a, b) que dans une partie se situant entre eux ; et le moyen de support (14) est incurvé sur le plan bidimensionnel avec un coude dans le sens du transport et transversalement par rapport à celui-ci et sa zone la plus profonde se situe dans une certaine région ou en un point positionné entre les rouleaux de transmission et de retour (2, 4) et entre les bordures longitudinales (6a, b) du dispositif de support de charge (6).

2. L'appareil de convoyage que décrit la revendication 1 et qui se **caractérise par le fait qu'**à l'état à vide le dispositif de support de charge (6) ne touche pas le moyen de support (14).

3. L'appareil de convoyage que décrit la revendication 1 et qui se **caractérise par le fait qu'**à l'état à vide certaines parties du dispositif de support de charge (6) reposent contre le moyen de support (14).

4. L'appareil de convoyage que décrit l'une ou l'autre des revendications précédentes et qui se **caractérise par le fait que** lorsque le dispositif de support de charge (6) est à l'état à vide, les trains de transmission (8a, b) sont guidés entre les rouleaux de transmission et de retour (2, 4) avec une force prédéterminée ou réglable de sollicitation.

5. L'appareil de convoyage que décrit l'une ou l'autre des revendications précédentes et qui se **caractérise par le fait que** le dispositif inférieur de support (20) est positionné sous la voie inférieure de transport (12) du dispositif de support de charge (6) afin de limiter ou éviter l'affaissement de la voie inférieure de transport (12).

6. L'appareil de convoyage que décrit l'une ou l'autre des revendications précédentes et qui se **caractérise par le fait que** les trains de transmission (8a, b) sont des bandes crantées qui viennent se fixer sur la partie interne des bordures longitudinales (6a, b) du dispositif de support de charge (6).

7. L'appareil de convoyage que décrit l'une ou l'autre des revendications précédentes et qui se **caractérise par le fait que** les rouleaux de transmission et de retour (2, 4) comportent une pluralité de zones de différents diamètres répartis sur toute leur longueur axiale (L), et comportant des zones offrant différents niveaux d'étirement dans le dispositif de support de charge (6).

8. Un véhicule équipé de l'appareil de convoyage que décrit l'une ou l'autre des revendications précédentes, si ce n'est qu'un sens de convoyage (13) de l'appareil de convoyage est transversal à un sens de déplacement du véhicule, spécialement configuré en tant que voiture du convoyeur de charges individuelles qui est raccordée par des moyens mécaniques ou d'une manière contrôlée pour faire avancer des véhicules du même type et est positionnée sur des ails ou est configurée en tant que système de transport sans chauffeur.
